# EUROPEAN PATENT APPLICATION

(11) **EP 4 625 265 A1**
(43) Date of publication of application: **01.10.2025**
(21) Application number: 25154895.4
(22) Date of filing: 30.01.2025
(51) Int. Cl.: G06N 10/20, G06N 10/80, G06N 5/01

(54) **INFORMATION PROCESSING PROGRAM, INFORMATION PROCESSING METHOD, AND INFORMATION PROCESSING DEVICE**

(30) Priority: 27.03.2024 JP 2024051757
(71) Applicant: Fujitsu Limited, Kawasaki-shi, Kanagawa 211-8588 (JP)
(72) Inventor: KIMURA, Yusuke, Kawasaki-shi, 211-8588 (JP)
(74) Representative: Haseltine Lake Kempner LLP

(57) **Abstract**

A program for causing a computer to execute: acquiring, for each of methods, a result of executing a second quantum circuit obtained from a first quantum circuit by the method, the first quantum circuit solving a second problem smaller than a first problem of an original quantum circuit, each of the methods exchanging a local qubit and a global qubit in a quantum circuit by inserting a gate into the quantum circuit; selecting any of the methods using the result of executing the second quantum circuit; and acquiring a result of solving the first problem by executing a quantum circuit obtained from the original quantum circuit by the selected method, wherein the methods includes: a method of exchanging qubits so as to reduce a difference between before and after the inserting; and a method of exchanging qubits so as to reduce the number of times of the inserting.

## Description

### FIELD

The embodiment discussed herein is related to an information processing program, an information processing method, and an information processing device.

### BACKGROUND

Typically, there is a quantum circuit simulator that expresses a vector for expressing a quantum state represented by each of a plurality of qubits as a decision diagram. The quantum circuit simulator has a property that a processing time required when a quantum circuit that performs an operation on the plurality of qubits is executed changes, depending on an order of arranging the plurality of qubits. Therefore, it is desirable to reduce the processing time required when the quantum circuit is executed, by inserting a gate for exchanging different qubits into the quantum circuit. Furthermore, there is a method for implementing this quantum circuit simulator by parallel processing of a plurality of arithmetic devices.

On the other hand, as related art, for example, there is one that executes a parallelizing component that may rearrange a first qubit that may be a control qubit with a second qubit and a replication component that may simulate a control NOT gate during the rearrangement by the parallelizing component. Furthermore, for example, there is a technique for inserting a SWAP gate so that all gates of a quantum circuit are local. Furthermore, for example, there is a technique for estimating a fidelity of a quantum computing system. Furthermore, for example, there is a technique for converting a first quantum circuit into a second quantum circuit including a standard trap ion gate set. Furthermore, for example, there is a technique for limiting a property of an extended Clifford group to a special case and approximating the property on a 2n-dimensional complex vector space.

Japanese National Publication of International Patent Application No. 2022-510138, U.S. Patent Application Publication No. 2020/0242295, U.S. Patent Application Publication No. 2022/0374750, Japanese National Publication of International Patent Application No. 2023-543703, and Japanese Laid-open Patent Publication No. 2012-063838 are disclosed as related art.

### SUMMARY

### TECHNICAL PROBLEM

However, the related art may increase a processing time required when a quantum circuit is executed. For example, it is not possible to determine how to insert a gate that exchanges different qubits, into the quantum circuit executed with a quantum circuit simulator that expresses a combination of quantum states as a decision diagram, and the processing time required when the quantum circuit is executed increases.

In one aspect, an object of the embodiment is to reduce a processing time required when a quantum circuit is executed.

### SOLUTION TO PROBLEM

According to an aspect of the embodiments, there is provided an information processing program including instructions which, when executed by a computer, cause the computer to execute processing including: acquiring, for each method of a plurality of methods, a result of executing on a quantum circuit simulator a second quantum circuit obtained by applying the each method to a first quantum circuit, the first quantum circuit being a quantum circuit that solves a second problem smaller in scale than a first problem of an original quantum circuit according to an algorithm same as the first problem, each of the plurality of methods being a method for exchanging a local qubit and a global qubit, so as to reduce cost required when a problem is solved, by inserting a gate that exchanges different qubits, into a quantum circuit that solves the problem, the quantum circuit simulator expressing a combination of different quantum states as a decision diagram; selecting, based on the acquired result of executing on the quantum circuit simulator the second quantum circuit obtained by each of the plurality of methods, any one method from among the plurality of methods; and acquiring a result of solving the first problem by executing on the quantum circuit simulator a third quantum circuit obtained by applying the selected method to the original quantum circuit, the third quantum circuit being a quantum circuit that solves the first problem by performing an operation on a plurality of first qubits according to the algorithm, wherein the plurality of methods includes: a first method of exchanging a local qubit and a global qubit, so as to reduce a difference in arrangement of qubits in a quantum circuit, between before and after the insertion of the gate into the quantum circuit; and a second method of exchanging a local qubit and a global qubit, so as to reduce the number of times of the insertion of the gate into the quantum circuit.

### ADVANTAGEOUS EFFECTS OF INVENTION

According to one mode, it is possible to reduce a processing time required when a quantum circuit is executed.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating a hardware configuration example of an information processing device 100;
FIG. 4 is a block diagram illustrating a functional configuration example of the information processing device 100;
FIG. 5 is an explanatory diagram illustrating an example of a DD-based simulator;
FIG. 6 is an explanatory diagram illustrating an operation example of the information processing device 100;
FIG. 7 is a flowchart (part 1) illustrating an example of an overall processing procedure;
FIG. 8 is a flowchart (part 2) illustrating an example of the overall processing procedure;
FIG. 9 is a flowchart illustrating an example of a first insertion processing procedure; and
FIG. 10 is a flowchart illustrating an example of a second insertion processing procedure.

### DESCRIPTION OF EMBODIMENTS

Hereinafter, an embodiment of an information processing program, an information processing method, and an information processing device will be described in detail with reference to the drawings.

### (Example of Information Processing Method According to Embodiment)

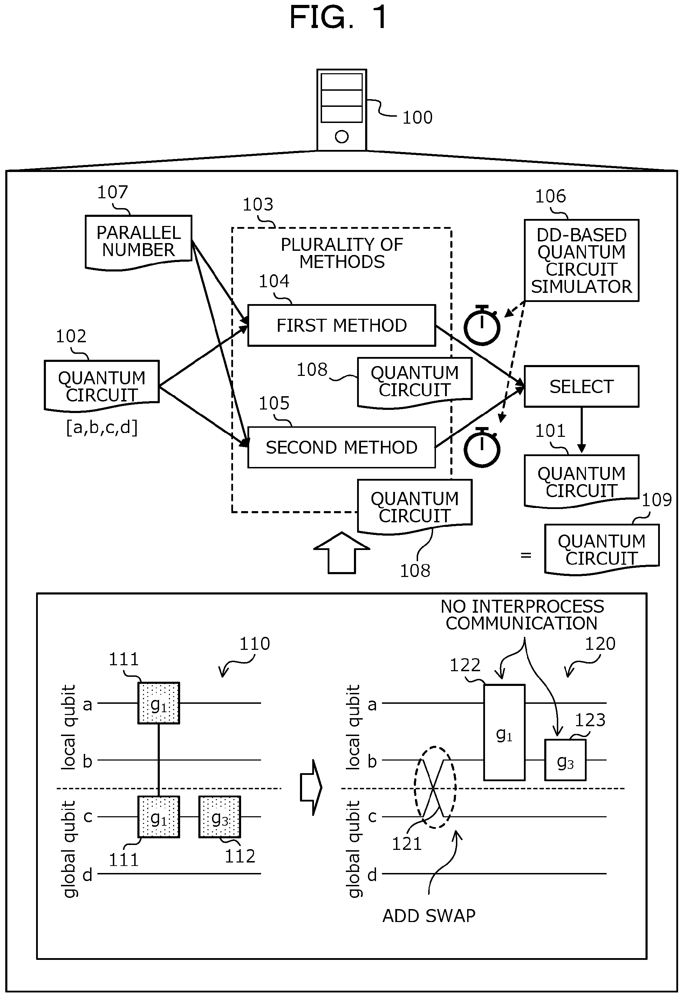

FIG. 1 is an explanatory diagram illustrating an example of an information processing method according to an embodiment. An information processing device 100 is a computer that inserts a gate for exchanging different qubits into a quantum circuit that solves a target problem. The information processing device 100 is, for example, a server, a personal computer (PC), or the like.

The quantum circuit is, for example, information indicating what operation is performed on one or more qubits. The quantum circuit includes one or more gates indicating content of the operation performed on the qubit. The gate is, for example, an Hadamard gate, a control X gate, a control Y gate, a control Z gate, a rotation gate, or the like. The quantum circuit is executed, for example, by an actual machine of a quantum computer or a quantum circuit simulator that simulates the quantum computer. The execution is to transition a quantum state represented by each qubit by performing an operation on one or more qubits and to obtain a final combination of the quantum states represented by the respective qubits.

Regarding the actual machine of the quantum computer, for example, a situation is considered where users who can use the quantum computer are limited. Furthermore, a situation is considered where the actual machine of the quantum computer is, for example, shared by a plurality of users and waiting for use occurs. A situation is considered where a fee to use the actual machine of the quantum computer is relatively high, for example. Regarding the actual machine of the quantum computer, for example, a situation is considered where an error occurs due to environmental noise, interference between qubits, noise at the time of operating the qubit, or the like. From these situations, there is a case where it is desired to execute the quantum circuit that solves the target problem by the quantum circuit simulator.

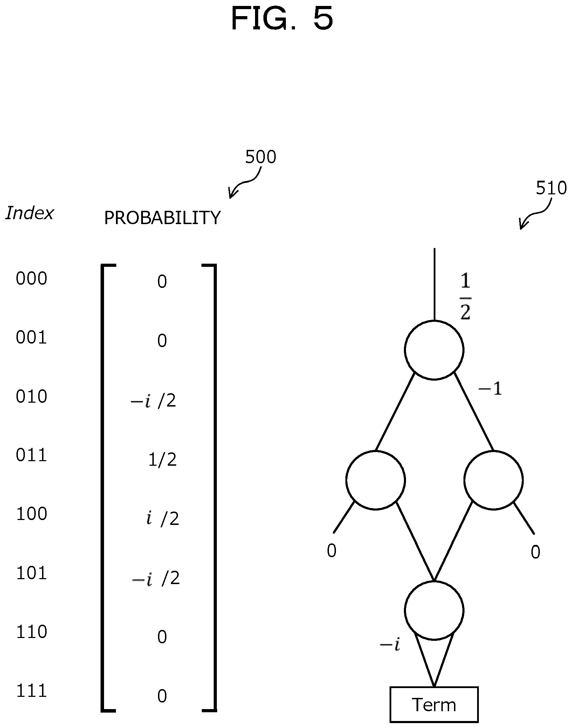

Here, there is a quantum circuit simulator that expresses and handles a combination of quantum states respectively represented by the multiple qubits as a decision diagram. The decision diagram includes a plurality of graph nodes. The graph nodes are coupled with an edge. In the decision diagram, for example, the edge coupled to the graph node represents a coefficient. In the decision diagram, for example, a route from a root to a leaf represents a combination of quantum states. In the decision diagram, for example, a product of the coefficients of the edges on the route corresponds to a probability of the combination of the quantum states. An example of the decision diagram will be described later with reference to FIG. 5.

In the following description, the decision diagram may be referred to as "DD". Furthermore, in the following description, there is a case where this quantum circuit simulator is referred to as a "DD-based quantum circuit simulator". It is considered that the DD-based quantum circuit simulator can suppress an increase in a memory usage required when the combination of the quantum states represented by the respective qubits is stored. Furthermore, it is considered that the DD-based quantum circuit simulator is effective for a quantum algorithm such as a Shor algorithm. In the DD-based quantum circuit simulator, a processing time required when the quantum circuit is executed tends to change, depending on what shape of the DD expresses the combination of the quantum states represented by the respective qubits.

Furthermore, in order to reduce the processing time required when the quantum circuit is executed, there is a case where it is desired to implement the DD-based quantum circuit simulator by parallel processing of a plurality of arithmetic devices communicably coupled. For example, since the DD tends to be larger as the number of qubits increases, there is a case where it is desired to share and handle the DD by a plurality of processes on the plurality of arithmetic devices. Here, a single arithmetic device may be responsible for two or more processes. The arithmetic device is also referred to as a node. A method for implementing the DD-based quantum circuit simulator by the parallel processing of the plurality of arithmetic devices is also referred to as multi-node.

Here, in the multi-node, when the quantum circuit is executed, an operation is performed on the one or more qubits, and in a case where quantum states of the one or more qubits are transitioned, interprocess communication may occur. Furthermore, in a case where the interprocess communication occurs in two or more processes respectively existing on the arithmetic devices different from each other, internode communication may further occur. A qubit that causes the interprocess communication may be referred to as, for example, a "global qubit". A qubit that does not cause the interprocess communication may be referred to as, for example, a "local qubit".

For example, in a case where a DD for N qubits is shared and handled by 2^{M} processes, N - M qubits on a head side, among the N qubits tend to serve as the local qubits, and M qubits on an end side tend to serve as the global qubits. For example, the number of processes handling the DD is referred to as a parallel number. Here, the parallel number is 2^{M}. Therefore, in a case where a quantum state of any one of the M qubits on the end side among the N qubits is transitioned, the internode communication may occur. Here, a time required for the internode communication tends to be relatively long. Then, when the internode communication occurs, the processing time required when the quantum circuit is executed increases.

In this way, depending on an order of arranging the plurality of qubits, the processing time required when the quantum circuit is executed is increased, due to the global qubit described above. Therefore, in order to reduce the processing time required when the quantum circuit is executed, it is preferable to control the order of arranging the plurality of qubits, so as to exchange the local qubit and the global qubit. Specifically, in order to reduce the processing time required when the quantum circuit is executed, it is preferable to insert, into the quantum circuit, a gate that exchanges the different qubits. The gate that exchanges the different qubits is, for example, a SWAP gate.

However, typically, there is a case where it is not possible to appropriately determine how to insert the gate that exchanges the different qubits, into the quantum circuit executed by the DD-based quantum circuit simulator and the processing time required when the quantum circuit is executed increases. For example, a method is considered for updating the quantum circuit so as to insert a gate representing an operation for exchanging the local qubit and the global qubit, immediately before a gate representing an operation that makes the internode communication occur, in the quantum circuit.

This method is assumed to be applied to the quantum circuit simulator that expresses and handles the combination of the quantum states represented by the respective qubits as a state vector. There is a case where it is not preferable to apply this method to the DD-based quantum circuit simulator, and conversely, this method may increase the processing time required when the quantum circuit is executed. Furthermore, a method that is preferably applied to the DD-based quantum circuit simulator is not proposed as a method for automatically inserting the gate that exchanges the different qubits into the quantum circuit. Therefore, typically, it is difficult to reduce the processing time required when the quantum circuit is executed.

Therefore, in the present embodiment, an information processing method that can reduce the processing time required when the quantum circuit is executed will be described. According to this information processing method, it is possible to appropriately insert the gate that exchanges the different qubits, into the quantum circuit that solves the target problem, so as to reduce the processing time required when the quantum circuit is executed.

In FIG. 1, the information processing device 100 acquires a quantum circuit 101 that solves a first problem by performing an operation on a plurality of first qubits according to a predetermined algorithm. The information processing device 100 acquires the quantum circuit 101, for example, based on a user's operation input via an input device (not illustrated). Here, it is assumed that an order of arranging the plurality of first qubits first be fixed. It is noted that the quantum circuit 101 may be referred to as an "original quantum circuit".

The information processing device 100 acquires a quantum circuit 102 that solves a second problem smaller in scale than the first problem, by performing an operation on a plurality of second qubits according to the algorithm same as that of the first problem. The number of first qubits and the number of second qubits may be, for example, the same or different. The information processing device 100 acquires the quantum circuit 102, for example, based on a user's operation input via the input device (not illustrated). For example, the information processing device 100 may acquire the quantum circuit 102 preset by the user. For example, the information processing device 100 may acquire the quantum circuit 102 by generating the quantum circuit 102 with reference to the quantum circuit 101. It is noted that the quantum circuit 102 may be referred to as a "first quantum circuit".

The information processing device 100 stores a plurality of methods 103 for exchanging the local qubit and the global qubit, so as to reduce cost required when a problem is solved, by inserting the gate that exchanges different qubits, into the quantum circuit that solves the problem. The gate that exchanges the different qubits is, for example, the SWAP gate.

The plurality of methods 103 includes, for example, a first method 104 for exchanging the local qubit and the global qubit, so as to reduce a difference in arrangement of the qubits in the quantum circuit that solves the problem, between before and after the insertion of the gate into the quantum circuit that solves the problem. The plurality of methods 103 includes, for example, a second method 105 for exchanging the local qubit and the global qubit, so as to reduce the number of times when the gate is inserted into the quantum circuit that solves the problem. The plurality of methods 103 may include, for example, one or more other methods different from the first method 104 and the second method 105.

As illustrated in FIG. 1, specifically, any one of the plurality of methods 103 functions to generate a quantum circuit 120 logically equivalent to a quantum circuit 110, by inserting a SWAP gate 121 into the quantum circuit 110. In the quantum circuit 110, for example, a case is considered where qubits a and b are local qubits, and qubits c and d are global qubits. In this case, when gates 111, 112, or the like for the global qubit exist, the interprocess communication occurs. On the other hand, one of the plurality of methods 103 can prevent gates 122, 123, or the like corresponding to the gates 111 and 112 from being related to the global qubit, for example, by the SWAP gate 121 and functions to suppress the interprocess communication.

The information processing device 100 can use a DD-based quantum circuit simulator 106. The DD-based quantum circuit simulator 106 expresses and handles a combination of different quantum states as a DD. The DD-based quantum circuit simulator 106 is implemented, for example, by the parallel processing of the plurality of arithmetic devices communicably coupled. The information processing device 100 may operate as any one of the plurality of arithmetic devices. The information processing device 100 can acquire a result of executing the quantum circuit by the DD-based quantum circuit simulator 106. The information processing device 100 acquires a parallel number 107 of the DD-based quantum circuit simulator 106.

(1-1) The information processing device 100 acquires, for each of the plurality of methods 103, a result of executing on the DD-based quantum circuit simulator 106 a quantum circuit 108 obtained by applying the each method to the quantum circuit 102 (i.e., the first quantum circuit), wherein the quantum circuit 108 is a quantum circuit that solves the second problem by performing the operation on the plurality of second qubits. The quantum circuit 108 is, for example, logically equivalent to the quantum circuit 102. This indicates that the quantum circuit 108 performs the operation on the plurality of second qubits according to the predetermined algorithm. The information processing device 100 acquires a processing time required when the quantum circuit 108 to which each method is applied is executed by the DD-based quantum circuit simulator 106, for example, as a result of executing the quantum circuit 108 to which each method is applied by the DD-based quantum circuit simulator 106. It is noted that the quantum circuit 108 may be referred to as a "second quantum circuit".

Specifically, the information processing device 100 generates the quantum circuit 108 by applying the method to the acquired quantum circuit 102, for each method, with reference to the parallel number 107. Specifically, the information processing device 100 acquires a result of executing the generated quantum circuit 108 by using the DD-based quantum circuit simulator 106, by the DD-based quantum circuit simulator 106. More specifically, the information processing device 100 acquires a processing time required when the generated quantum circuit 108 is executed by the DD-based quantum circuit simulator 106, as a result of executing the generated quantum circuit 108 by the DD-based quantum circuit simulator 106. As a result, the information processing device 100 can evaluate whether or not each of the plurality of methods 103 is useful from the viewpoint of reducing the processing time required when the first problem is solved.

(1-2) The information processing device 100 selects any one method to be applied to the quantum circuit 101 that solves the first problem, from among the plurality of methods 103, based on the result of executing the acquired quantum circuit 108, to which each method is applied, by the DD-based quantum circuit simulator 106. For example, the information processing device 100 selects a method with the shortest acquired processing time, from among the plurality of methods 103, as any one method to be applied to the quantum circuit 101 that solves the first problem. As a result, the information processing device 100 can appropriately select the method useful from the viewpoint of reducing the processing time required when the first problem is solved, from among the plurality of methods 103.

(1-3) The information processing device 100 generates, by applying the selected method to the quantum circuit 101 (i.e., the original quantum circuit), a quantum circuit 109 that solves the first problem by performing the operation on the plurality of first qubits. The quantum circuit 109 is, for example, logically equivalent to the quantum circuit 101. The information processing device 100 acquires a result of solving the first problem by executing the generated quantum circuit 109 by the DD-based quantum circuit simulator 106. For example, the information processing device 100 acquires a final combination of quantum states represented by the respective first qubits, as the result of solving the first problem. It is noted that the quantum circuit 109 may be referred to as a "third quantum circuit".

As a result, the information processing device 100 can appropriately insert a gate that exchanges the different first qubits, into the quantum circuit 101 that solves the first problem. Therefore, the information processing device 100 can generate the quantum circuit 109 that solves the first problem, that can be executed in a processing time shorter than that of the quantum circuit 101 that solves the first problem. The information processing device 100 can suppress an increase in the processing time required when the quantum circuit 109 that solves the first problem is executed. The information processing device 100 can reduce the processing time required when the first problem is solved, by executing the quantum circuit 109 that solves the first problem.

Here, a case has been described where the information processing device 100 fixes the order of arranging the plurality of first qubits at the beginning. However, the present embodiment is not limited to this. For example, there may be a case where an order useful from the viewpoint of reducing the processing time required when the first problem is solved is considered from among the plurality of orders in which the information processing device 100 arranges the plurality of first qubits at the beginning.

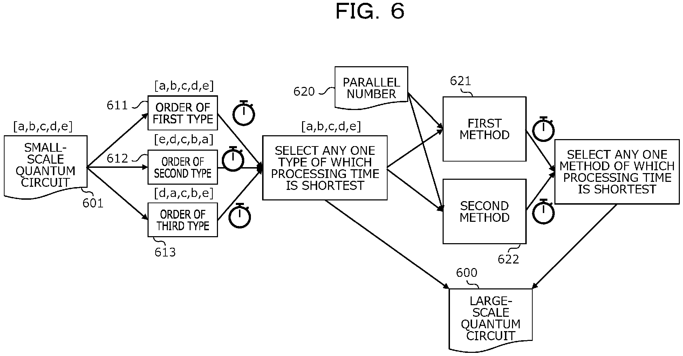

For example, the information processing device 100 selects the method to be applied to the quantum circuit 101 that solves the first problem, from among the plurality of methods 103, after considering the order useful from the viewpoint of reducing the processing time required when the first problem is solved. A case where the information processing device 100 considers the order useful from the viewpoint of reducing the processing time when the first problem is solved, from among the plurality of orders will be described later, for example, with reference to FIGs. 5 and 6.

Here, a case where a function as the information processing device 100 is implemented by a single computer has been described. However, the present embodiment is not limited to this. For example, the function as the information processing device 100 may be implemented by cooperation of a plurality of computers in some cases. For example, there may be a case where the function as the information processing device 100 is implemented on a cloud.

### (Example of Information Processing System 200)

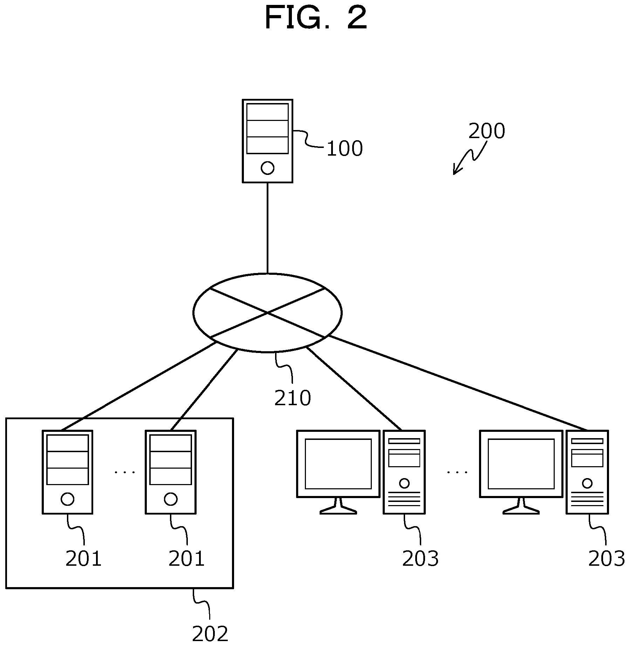

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100, a parallel processing system 202 including a plurality of arithmetic devices 201, and one or more client devices 203.

In the information processing system 200, the information processing device 100 and the arithmetic device 201 are coupled via a wired or wireless network 210. The network 210 is, for example, a local area network (LAN), a wide area network (WAN), the Internet, or the like. Furthermore, in the information processing system 200, the information processing device 100 and the client devices 203 are coupled via the wired or wireless network 210.

The information processing device 100 is a computer that inserts the SWAP gate into the quantum circuit that solves the target problem. The target problem is, for example, the first problem. The information processing device 100 receives a processing request for requesting to solve the first problem, from the client devices 203. The processing request includes, for example, the quantum circuit that solves the first problem. The processing request includes, for example, the quantum circuit that solves the second problem smaller in scale than the first problem.

The quantum circuit that solves the first problem is information that defines a gate representing each of a series of operations performed on the plurality of first qubits in time series, for the plurality of first qubits. The quantum circuit that solves the first problem is information that enables to solve the first problem, by performing the series of operations on the plurality of first qubits.

The quantum circuit that solves the second problem is information that defines a gate representing each of a series of operations performed on the plurality of second qubits in time series, for the plurality of second qubits. The quantum circuit that solves the second problem is information that enables to solve the second problem, by performing the series of operations on the plurality of second qubits according to the algorithm same as that of the first problem.

The information processing device 100 stores the plurality of methods for exchanging the local qubit and the global qubit, so as to reduce cost required when the problem is solved, by inserting the SWAP gate into the quantum circuit that solves the problem. The cost is the processing time or the like.

The plurality of methods includes, for example, a first method for exchanging the local qubit and the global qubit, so as to reduce a difference in arrangement of the qubits in the quantum circuit that solves the problem, between before and after the insertion of the SWAP gate into the quantum circuit that solves the problem. Specifically, the first method reduces the difference in the arrangement of the qubits, in the quantum circuit, between before and after the insertion, each time when the one or more SWAP gates are inserted into the quantum circuit so as to exchange the local qubit and the global qubit. The plurality of methods includes, for example, a second method for exchanging the local qubit and the global qubit, so as to reduce the number of times when the SWAP gate is inserted into the quantum circuit that solves the problem.

The information processing device 100 acquires the quantum circuit that solves the first problem. For example, the information processing device 100 acquires the quantum circuit that solves the first problem by extracting the quantum circuit from the received processing request. The information processing device 100 acquires the quantum circuit that solves the second problem. For example, the information processing device 100 acquires the quantum circuit that solves the second problem by extracting the quantum circuit from the received processing request. For example, there may be a case where the information processing device 100 acquires the quantum circuit that solves the second problem by generating the quantum circuit, based on the acquired quantum circuit that solves the first problem.

As described below, the information processing device 100 generates another quantum circuit that is logically equivalent to the acquired quantum circuit that solves the first problem, so as to reduce the processing time required when the first problem is solved.

For example, the information processing device 100 considers the order useful from the viewpoint of reducing the processing time required when the first problem is solved, among the plurality of orders of arranging the plurality of first qubits at the beginning and selects any one order. Specifically, the information processing device 100 stores a plurality of types of orders of arranging the qubits. The plurality of types includes, for example, at least a first type and a second type among the first type of arranging the qubits in an original order, a second type of arranging the qubits in a reverse order of the original order, and a third type of arranging the qubits in an order in which designation is received.

Specifically, the information processing device 100 generates the quantum circuit that performs the operation on the plurality of second qubits in the order of the type, for each of the plurality of types, and solves the second problem, based on the acquired quantum circuit that solves the second problem. Specifically, the information processing device 100 controls the parallel processing system 202 so as to execute the quantum circuit that performs the operation on the plurality of second qubits in the order of each type and solves the second problem, by the DD-based quantum circuit simulator. Specifically, the information processing device 100 controls the parallel processing system 202, by transmitting the quantum circuit that performs the operation on the plurality of second qubits in the order of each type and solves the second problem, to each arithmetic device 201.

Specifically, the information processing device 100 measures a processing time required when the quantum circuit that solves the second problem is executed, as a result of executing the quantum circuit that performs the operation on the plurality of second qubits in the order of each type and solves the second problem. Specifically, the information processing device 100 selects any one type of which the measured processing time is the shortest, from among the plurality of types as the type useful from the viewpoint of reducing the processing time required when the first problem is solved. In this way, the information processing device 100 considers the order useful from the viewpoint of reducing the processing time required when the first problem is solved.

For example, the information processing device 100 considers the method useful from the viewpoint of reducing the processing time required when the first problem is solved, from among the plurality of methods and selects any one method. Specifically, the information processing device 100 generates the quantum circuit, to which each method is applied, that solves the second problem, by applying the method to the quantum circuit that performs the operation on the plurality of second qubits in the order of the selected type and solves the second problem, for each method.

Specifically, the information processing device 100 controls the parallel processing system 202, so as to execute the quantum circuit, to which each method is applied, that solves the second problem, by the DD-based quantum circuit simulator. Specifically, the information processing device 100 controls the parallel processing system 202, by transmitting the quantum circuit, to which each method is applied, that solves the second problem, to each arithmetic device 201.

Specifically, as a result of executing the quantum circuit, to which each method is applied, that solves the second problem, the information processing device 100 measures the processing time required when the quantum circuit, to which each method is applied, that solves the second problem is executed. Specifically, the information processing device 100 selects any one method of which the measured processing time is the shortest, from among the plurality of methods, as the method useful from the viewpoint of reducing the processing time required when the first problem is solved.

For example, the information processing device 100 generates another quantum circuit that is logically equivalent to the acquired quantum circuit that solves the first problem, based on the selected type and the selected method. Specifically, the information processing device 100 generates the quantum circuit that performs the operation on the plurality of first qubits in the order of the selected type and solves the first problem, based on the acquired quantum circuit that solves the first problem.

Specifically, the information processing device 100 generates the quantum circuit, to which the selected method is applied, that solves the first problem, by applying the selected method to the generated quantum circuit that solves the first problem. As a result, the information processing device 100 generates another quantum circuit that is logically equivalent to the acquired quantum circuit that solves the first problem, so as to reduce the processing time required when the first problem is solved.

The information processing device 100 controls the parallel processing system 202, so as to execute the generated quantum circuit, to which any one method is applied, that solves the first problem, by the DD-based quantum circuit simulator. Specifically, the information processing device 100 controls the parallel processing system 202, by transmitting the generated quantum circuit, to which any one method is applied, that solves the first problem, to each arithmetic device 201. The information processing device 100 receives a probability of the final combination of the quantum states, as a result of executing the quantum circuit that solves the first problem, from the arithmetic device 201.

The information processing device 100 transmits the received result of executing the quantum circuit that solves the first problem, to the client devices 203. As a result, the information processing device 100 can reduce the processing time required when the quantum circuit that solves the first problem is executed and reduce the processing time required when the first problem is solved. The information processing device 100 is, for example, a server, a PC, or the like.

The arithmetic device 201 is a computer that executes parallel processing on the DD-based quantum circuit simulator that simulates a change in the combination of the quantum states caused by the operation. The arithmetic device 201 has a process for managing a DD that expresses the combination of the quantum states. The arithmetic device 201 executes the quantum circuit, under control of the information processing device 100. The arithmetic device 201 receives, for example, the quantum circuit to be executed, from the information processing device 100. The arithmetic device 201 updates the DD managed by the arithmetic device 201, by executing the received quantum circuit, for example, in cooperation with another arithmetic device 201. The arithmetic device 201 transmits a result of executing the quantum circuit, to the information processing device 100. For example, the arithmetic device 201 transmits the possibility of the final combination of the quantum states, as a result of executing the quantum circuit, based on the updated DD, to the information processing device 100. The arithmetic device 201 is, for example, a server, a PC, or the like.

The client devices 203 is a computer used by an operator. The client devices 203 receives designation of the quantum circuit that solves the first problem, based on an operation input of the operator via an input device (not illustrated). The client devices 203 receives designation of the quantum circuit that solves the second problem, based on the operation input of the operator via the input device (not illustrated). The client devices 203 generates a processing request including the designated quantum circuit that solves the first problem and the designated quantum circuit that solves the second problem and transmits the processing request to the information processing device 100. The client devices 203 receives a result of solving the first problem from the information processing device 100. The client devices 203 outputs the result of solving the first problem so that the operator can refer to the result. The client device 203 is, for example, a PC, a tablet terminal, a smartphone, or the like.

Here, a case has been described where the information processing device 100 is a device different from the arithmetic device 201. However, the present embodiment is not limited to this. For example, there may be a case where the information processing device 100 has a function as the arithmetic device 201 and operates as the arithmetic device 201. Here, a case has been described where the information processing device 100 is a device different from the client devices 203. However, the present embodiment is not limited to this. For example, there may be a case where the information processing device 100 has a function as the client devices 203 and operates as the client devices 203.

### (Hardware Configuration Example of Information Processing Device 100)

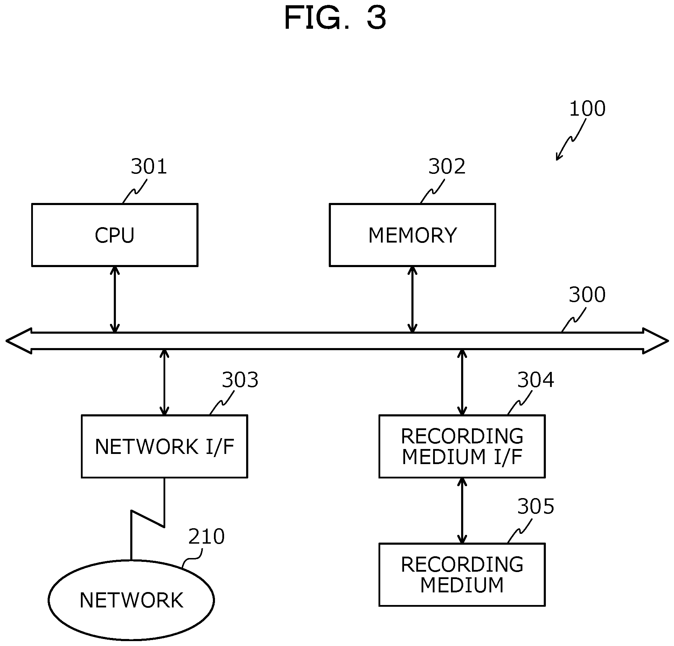

Next, a hardware configuration example of the information processing device 100 will be described with reference to FIG. 3.

FIG. 3 is a block diagram illustrating a hardware configuration example of the information processing device 100. In FIG. 3, the information processing device 100 includes a central processing unit (CPU) 301, a memory 302, a network Interface (I/F) 303, a recording medium I/F 304, and a recording medium 305. Furthermore, the individual components are coupled to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line, and is coupled to another computer via the network 210. Then, the network I/F 303 takes control of an interface between the network 210 and the inside, and controls input and output of data to and from the another computer. The network I/F 303 is, for example, a modem, a LAN adapter, or the like.

The recording medium I/F 304 controls read and write of data from and to the recording medium 305 under the control of the CPU 301. For example, the recording medium I/F 304 is a disk drive, a solid state drive (SSD), a universal serial bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, and the like in addition to the components described above. In addition, the information processing device 100 may include a plurality of the recording medium I/Fs 304 and a plurality of the recording media 305. Furthermore, the information processing device 100 does not need to include the recording medium I/F 304 or the recording medium 305.

### (Hardware Configuration Example of Arithmetic Device 201)

Specifically, since a hardware configuration example of the arithmetic device 201 is similar to the hardware configuration example of the information processing device 100 illustrated in FIG. 3, description thereof will be omitted.

### (Hardware Configuration Example of Client Device 203)

Specifically, since a hardware configuration example of the client device 203 is similar to the hardware configuration example of the information processing device 100 illustrated in FIG. 3, description thereof will be omitted.

### (Functional Configuration Example of Information Processing Device 100)

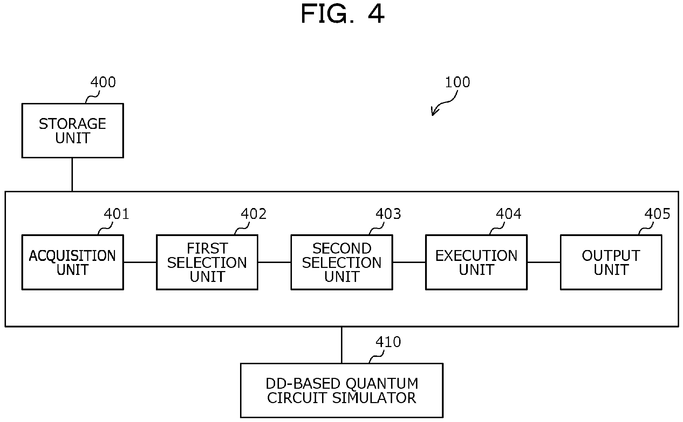

Next, a functional configuration example of the information processing device 100 will be described with reference to FIG. 4.

FIG. 4 is a block diagram illustrating the functional configuration example of the information processing device 100. In FIG. 4, the information processing device 100 can use a DD-based quantum circuit simulator 410. The DD-based quantum circuit simulator 410 is implemented, for example, by parallel processing of the plurality of arithmetic devices 201 communicably coupled.

The information processing device 100 includes a storage unit 400, an acquisition unit 401, a first selection unit 402, a second selection unit 403, an execution unit 404, and an output unit 405.

The storage unit 400 is implemented by a storage area such as the memory 302 or the recording medium 305 illustrated in FIG. 3, for example. Hereinafter, a case where the storage unit 400 is included in the information processing device 100 will be described. However, the present embodiment is not limited to this. For example, the storage unit 400 may be included in a device different from the information processing device 100, and content stored in the storage unit 400 may be able to be referred to by the information processing device 100.

The acquisition unit 401 to the output unit 405 function as examples of a control unit. Specifically, the acquisition unit 401 to the output unit 405 implement functions thereof by, for example, causing the CPU 301 to execute a program stored in the storage area such as the memory 302 or the recording medium 305 illustrated in FIG. 3, or by the network I/F 303. A processing result of each functional unit is stored in, for example, the storage area such as the memory 302 or the recording medium 305 illustrated in FIG. 3.

The storage unit 400 stores various types of information to be referred to or updated in processing of each functional unit. The storage unit 400 stores, for example, one quantum circuit that is executed when the first problem to be the target problem is solved. In the following description, there is a case where the quantum circuit that is executed when the first problem is solved is referred to as "quantum circuit that solves first problem". The quantum circuit that solves the first problem is information regarding the plurality of first qubits. The quantum circuit that solves the first problem is, for example, information that enables to solve the first problem by performing the operation on the plurality of first qubits according to the predetermined algorithm. The quantum circuit that solves the first problem is acquired, for example, by the acquisition unit 401. The storage unit 400 stores, for example, identification information used to identify each of the plurality of first qubits on which the operation is performed when the first problem is solved. The identification information used to identify the first qubit is acquired, for example, by the acquisition unit 401.

The storage unit 400 stores, for example, one quantum circuit that is executed when the second problem smaller in scale than the first problem is solved. In the following description, there is a case where the quantum circuit that is executed when the second problem is solved is referred to as "quantum circuit that solves second problem". The quantum circuit that solves the second problem is information regarding the plurality of second qubits. The first qubit and the second qubit may be common or different. The quantum circuit that solves the second problem is, for example, information that enables to solve the second problem by performing the operation on the plurality of second qubits according to the predetermined algorithm same as the first problem. The quantum circuit that solves the second problem is acquired, for example, by the acquisition unit 401. The storage unit 400 stores, for example, identification information used to identify each of the plurality of second qubits on which the operation is performed when the second problem is solved. The identification information used to identify the second qubit is acquired, for example, by the acquisition unit 401.

The storage unit 400 stores, for example, the plurality of methods for exchanging at least the local qubit and the global qubit, in the quantum circuit that solves a problem, so as to reduce cost required when the problem is solved. The cost is, for example, a processing time, a processing burden, or the like. Each method exchanges at least the local qubit and the global qubit, by inserting the gate that exchanges the different qubits into the quantum circuit that solves the problem.

The plurality of methods includes, for example, the first method for exchanging the local qubit and the global qubit, so as to reduce a difference in arrangement of the qubits in the quantum circuit that solves the problem, between before and after the insertion of the gate into the quantum circuit that solves the problem. Specifically, the first method reduces the difference in the arrangement of the qubits, in the quantum circuit, between before and after the insertion, each time when the one or more SWAP gates are inserted into the quantum circuit so as to exchange the local qubit and the global qubit. The plurality of methods includes, for example, the second method for exchanging the local qubit and the global qubit, so as to reduce the number of times when the gate is inserted into the quantum circuit that solves the problem. The plurality of methods is acquired, for example, by the acquisition unit 401. For example, the plurality of methods may be preset by the user.

For example, the storage unit 400 stores the plurality of types of the orders of arranging the qubits. The plurality of types includes, for example, at least the first type and the second type among the first type of arranging the qubits in the original order, the second type of arranging the qubits in the reverse order of the original order, and the third type of arranging the qubits in the order in which the designation is received. For example, the first type is preset by the user. For example, the second type is preset by the user. For example, the third type is acquired by the acquisition unit 401. For example, the third type may be preset by the user.

The acquisition unit 401 acquires various types of information to be used for processing of each functional unit. The acquisition unit 401 stores various types of the acquired information in the storage unit 400 or outputs various types of the acquired information to each functional unit. Furthermore, the acquisition unit 401 may output the various types of information stored in the storage unit 400 to each functional unit. The acquisition unit 401 acquires various types of information, for example, based on the user's operation input. The acquisition unit 401 may receive various types of information from, for example, a device different from the information processing device 100.

The acquisition unit 401 acquires, for example, the processing request for requesting to solve the first problem. The processing request includes, for example, one quantum circuit that solves the first problem. The processing request includes, for example, the identification information used to identify each of the plurality of first qubits. The processing request includes, for example, one quantum circuit that solves the second problem. The processing request includes, for example, the identification information used to identify each of the plurality of second qubits. Specifically, the acquisition unit 401 acquires the processing request for requesting to solve the first problem, by receiving an input of the processing request for requesting to solve the first problem. Specifically, the acquisition unit 401 may acquire the processing request for requesting to solve the first problem, by receiving the processing request for requesting to solve the first problem, from another computer. The another computer is, for example, the client device 203 or the like.

The acquisition unit 401 acquires, for example, one quantum circuit that solves the first problem. Specifically, the acquisition unit 401 acquires one quantum circuit that solves the first problem, by extracting one quantum circuit that solves the first problem from the acquired processing request. Specifically, the acquisition unit 401 acquires one quantum circuit that solves the first problem, by receiving an input of the one quantum circuit that solves the first problem. Specifically, the acquisition unit 401 may acquire one quantum circuit that solves the first problem, by receiving one quantum circuit that solves the first problem, from another computer. The another computer is, for example, the client device 203 or the like. In the following description, there is a case where one quantum circuit that solves the first problem acquired by the acquisition unit 401 is referred to as "initial quantum circuit that solves first problem".

The acquisition unit 401 acquires, for example, one quantum circuit that solves the second problem. Specifically, the acquisition unit 401 acquires one quantum circuit that solves the second problem, by extracting one quantum circuit that solves the second problem from the acquired processing request. Specifically, the acquisition unit 401 acquires one quantum circuit that solves the second problem, by receiving an input of the one quantum circuit that solves the second problem. Specifically, the acquisition unit 401 may acquire one quantum circuit that solves the second problem, by receiving one quantum circuit that solves the second problem, from another computer. The another computer is, for example, the client device 203 or the like. In the following description, there is a case where one quantum circuit that solves the second problem acquired by the acquisition unit 401 is referred to as "initial quantum circuit that solves second problem".

The acquisition unit 401 acquires, for example, the identification information used to identify each of the plurality of first qubits. Specifically, the acquisition unit 401 acquires the identification information used to identify each first qubit, by receiving an input of the identification information used to identify each first qubit. Specifically, the acquisition unit 401 may acquire the identification information used to identify each first qubit, by receiving the identification information used to identify each first qubit, from another computer. The another computer is, for example, the client device 203 or the like.

The acquisition unit 401 acquires, for example, the identification information used to identify each of the plurality of second qubits. Specifically, the acquisition unit 401 acquires the identification information used to identify each second qubit, by receiving an input of the identification information used to identify each second qubit. Specifically, the acquisition unit 401 may acquire the identification information used to identify each second qubit, by receiving the identification information used to identify each second qubit, from another computer. The another computer is, for example, the client device 203 or the like.

The acquisition unit 401 acquires, for example, the plurality of methods. Specifically, the acquisition unit 401 acquires the plurality of methods, by receiving an input of the plurality of methods. Specifically, the acquisition unit 401 may acquire the plurality of methods, by receiving the plurality of methods from another computer. The another computer is, for example, the client device 203 or the like.

The acquisition unit 401 acquires, for example, the third type. Specifically, the acquisition unit 401 acquires the third type, by receiving an input of the third type. Specifically, the acquisition unit 401 may acquire the third type, by receiving the third type from another computer. The another computer is, for example, the client device 203 or the like. The acquisition unit 401 may acquire a specific example of the order of the plurality of first qubits that is the third type, without acquiring the third type. The acquisition unit 401 may acquire a specific example of the order of the plurality of second qubits that is the third type, without acquiring the third type.

The acquisition unit 401 may accept a start trigger to start processing of any one of the functional units. The start trigger is, for example, a predetermined operation input made by the user. The start trigger may be, for example, reception of predetermined information from another computer. The start trigger may be, for example, output of predetermined information by any one of the functional units. The acquisition unit 401 may accept, for example, the acquisition of the processing request, as the start trigger to start processing of the first selection unit 402, the second selection unit 403, and the execution unit 404.

The first selection unit 402 acquires a result of executing the quantum circuit that solves the second problem by performing the operation on the plurality of second qubits in the order of the type, by the DD-based quantum circuit simulator 410, for each of the plurality of types. For example, the first selection unit 402 generates the quantum circuit that solves the second problem by performing the operation on the plurality of second qubits in the order of the type, for each of the plurality of types, based on the acquired initial quantum circuit that solves the second problem.

For example, the first selection unit 402 controls the parallel processing system 202 so as to execute the generated quantum circuit that solves the second problem by performing the operation on the plurality of second qubits in the order of each type, by the DD-based quantum circuit simulator 410. For example, the first selection unit 402 detects that the execution of the quantum circuit that solves the second problem by performing the operation on the plurality of second qubits in the order of each type by the DD-based quantum circuit simulator 410 is completed.

For example, the first selection unit 402 measures the processing time required when the quantum circuit that solves the second problem is executed, as a result of executing the quantum circuit that solves the second problem by performing the operation on the plurality of second qubits in the order of each type by the DD-based quantum circuit simulator 410. As a result, the first selection unit 402 can evaluate whether or not each of the plurality of types is useful from the viewpoint of reducing the processing time required when the first problem is solved.

The first selection unit 402 selects any one type to be applied to the quantum circuit that solves the first problem, from among the plurality of types, based on the result of execution by the DD-based quantum circuit simulator 410 acquired by the first selection unit 402. For example, the first selection unit 402 selects the type of which the measured processing time is the shortest, from among the plurality of types, as any one type to be applied to the quantum circuit that solves the first problem. As a result, the first selection unit 402 can appropriately select any one type to be applied to the quantum circuit that solves the first problem, in consideration of whether or not each of the plurality of types is useful from the viewpoint of reducing the processing time required when the first problem is solved.

The second selection unit 403 acquires a result of executing the quantum circuit, to which the method is applied, that solves the second problem by performing the operation on the plurality of second qubits in an order of a specific type, by the DD-based quantum circuit simulator 410, for each of the plurality of methods. The specific type is, for example, any one type selected by the first selection unit 402. The specific type may be, for example, fixed to the first type, the second type, or the like. For example, the second selection unit 403 generates the quantum circuit, to which the method is applied, that solves the second problem by performing the operation on the plurality of second qubits in the order of the specific type, for each method, based on the acquired initial quantum circuit that solves the second problem.

For example, the second selection unit 403 controls the parallel processing system 202, so as to execute the generated quantum circuit, to which each method is applied, that solves the second problem, by the DD-based quantum circuit simulator 410. For example, the second selection unit 403 detects that the execution of the quantum circuit, to which each method is applied, that solves the second problem, by the DD-based quantum circuit simulator 410 is completed. For example, the second selection unit 403 measures the processing time required when the quantum circuit that solves the second problem is executed, as the result of executing the quantum circuit, to which each method is applied, that solves the second problem by the DD-based quantum circuit simulator 410. As a result, the second selection unit 403 can evaluate whether or not each of the plurality of methods is useful from the viewpoint of reducing the processing time required when the first problem is solved.

The second selection unit 403 selects the method to be applied to the quantum circuit that solves the first problem, from among the plurality of methods, based on the result of the execution by the DD-based quantum circuit simulator 410 acquired by the second selection unit 403. For example, the second selection unit 403 selects the method of which the measured processing time is the shortest, from among the plurality of methods, as the method to be applied to the quantum circuit that solves the first problem. As a result, the first selection unit 402 can appropriately select the method to be applied to the quantum circuit that solves the first problem, in consideration of whether or not each of the plurality of methods is useful from the viewpoint of reducing the processing time required when the first problem is solved.

The execution unit 404 acquires a result of solving the first problem. For example, the execution unit 404 generates the quantum circuit, to which any one method selected by the second selection unit 403 is applied, that solves the first problem by performing the operation on the plurality of first qubits in the order of the specific type. The specific type is, for example, any one type selected by the first selection unit 402. The specific type may be, for example, fixed to the first type, the second type, or the like. For example, the execution unit 404 acquires the result of solving the first problem, by controlling the parallel processing system 202, so as to execute the generated quantum circuit by the DD-based quantum circuit simulator 410. As a result, the execution unit 404 can reduce the processing time required when the first problem is solved.

The output unit 405 outputs a processing result of at least any one of the functional units. Examples of an output format include display on a display, print output to a printer, transmission to an external device by the network I/F 303, or storage in the storage area such as the memory 302 or the recording medium 305. As a result, the output unit 405 can notify the user of the processing result of at least any one of the functional units to improve convenience of the information processing device 100.

For example, the output unit 405 outputs the result of solving the first problem acquired by the execution unit 404. Specifically, the output unit 405 outputs the result of solving the first problem so that the user can refer to the result. Specifically, the output unit 405 transmits the result of solving the first problem to another computer. The another computer is, for example, the client device 203 or the like. As a result, the output unit 405 can make the result of solving the first problem be available outside.

Here, a case has been described where the information processing device 100 includes the acquisition unit 401, the first selection unit 402, the second selection unit 403, the execution unit 404, and the output unit 405. However, the present embodiment is not limited to this. For example, there may be a case where the information processing device 100 does not include any one of the functional units. Specifically, there may be a case where the information processing device 100 does not include the first selection unit 402.

### (Operation Example of Information Processing Device 100)

Next, an operation example of the information processing device 100 will be described with reference to FIGs. 5 and 6. First, for example, an example of the DD-based simulator will be described with reference to FIG. 5.

FIG. 5 is an explanatory diagram illustrating an example of the DD-based simulator. As described above, the DD-based simulator expresses and handles a plurality of combinations of quantum states represented by respective qubits of the plurality of qubits as DDs. In the example in FIG. 5, it is assumed that the number of qubits be three. Therefore, the number of combinations of the quantum states represented by the respective qubits is 2³ = 8. Specifically, the combinations of the quantum states represented by the respective qubits are 000 and 001, 010 and 011, 100 and 101, and 110 and 111. A left side of the table 500 in FIG. 5 is Index representing the combination of the quantum states represented by the respective qubits. A right side of the table 500 in FIG. 5 is a value representing a probability of the combination of the quantum states represented by the respective qubits.

A DD 510 in FIG. 5 corresponds to the table 500. The DD 510 represents a combination of quantum states represented by respective qubits and a probability of the combination. The DD 510 includes a plurality of graph nodes. The graph nodes are coupled with an edge. In the DD 510, for example, the edge coupled to the graph node represents a coefficient. In the example in FIG. 5, specifically, the coefficient is 1/2, - 1, or the like. The edge (not illustrated) of the coefficient represents a coefficient 1.

In the DD 510, for example, a route from a root to a leaf represents the combination of the quantum states. Specifically, passing through an edge on a left side represents zero of the quantum state, and passing through an edge on a right side represents one of the quantum state. Therefore, a route from the root, passing through the edge on the left side, passing through the edge on the right side, and passing through the edge on the left side represents Index010. In the DD 510, for example, a product of the coefficients of the edges on the route corresponds to the probability of the combination of the quantum states. Specifically, in the DD 510, a probability of Index010 is - i/2 obtained by multiplying a coefficient 1/2, a coefficient 1, a coefficient 1, and a coefficient - i. Next, an operation example of the information processing device 100 that uses the DD-based simulator will be described with reference to FIG. 6.

FIG. 6 is an explanatory diagram illustrating the operation example of the information processing device 100. In FIG. 6, (6-1) the information processing device 100 can use the DD-based quantum circuit simulator. The information processing device 100 acquires M = 1 that defines a parallel number 2^{M} of the DD-based quantum circuit simulator. The information processing device 100 acquires a large-scale quantum circuit 600 that solves the target problem according to a predetermined algorithm. The large-scale quantum circuit 600 represents an operation on X first qubits.

The information processing device 100 acquires a small-scale quantum circuit 601 that solves a problem smaller in scale than the target problem, according to the same algorithm as the large-scale quantum circuit 600. The small-scale quantum circuit 601 represents an operation on N second qubits. In the example in FIG. 6, it is assumed that N = 5. Specifically, it is assumed that second qubits a, b, c, d, and e exist. Furthermore, it is preferable that N < X.

Specifically, a case is considered where the large-scale quantum circuit 600 and the small-scale quantum circuit 601 are quantum circuits that perform factorization. In this case, specifically, it is considered that the large-scale quantum circuit 600 represents a series of operations for performing factorization with a relatively large value A. Specifically, it is considered that the small-scale quantum circuit 601 represents a series of operations for performing factorization with a value B smaller than the value A.

Specifically, a case is considered where the large-scale quantum circuit 600 and the small-scale quantum circuit 601 perform inverse Fourier transform. In this case, specifically, it is considered that the large-scale quantum circuit 600 represents a series of operations for performing the inverse Fourier transform with A bits that is a relatively large number. Specifically, it is considered that the small-scale quantum circuit 601 represents a series of operations for performing the inverse Fourier transform with B bits less than A bits.

(6-2) The information processing device 100 stores the plurality of types of the orders of arranging the qubits. The plurality of types includes, for example, the first type of arranging the qubits in the original order, the second type of arranging the qubits in the reverse order of the original order, and the third type of arranging the qubits in the order in which the designation is received. In the example in FIG. 6, an order 611 of the first type of the second qubits a, b, c, d, and e is [a, b, c, d, e]. An order 612 of the second type of the second qubits a, b, c, d, and e is [e, d, c, b, a]. An order 613 of the third type of the second qubits a, b, c, d, and e is [d, a, c, b, e].

(6-3) The information processing device 100 stores a plurality of methods for exchanging at least the local qubit and the global qubit, by inserting the one or more SWAP gates into a quantum circuit that solves a problem, related to the plurality of qubits. The plurality of methods includes, for example, a method according to characteristics of the DD-based simulator.

Specifically, the information processing device 100 stores a first method 621 for exchanging at least the local qubit and the global qubit, so as to reduce a difference in the arrangement of the qubits in the quantum circuit, between before and after the insertion of the one or more SWAP gates into the quantum circuit.

The first method 621 is effective for a case where it is considered that an initial arrangement order of the qubits in the quantum circuit has relatively high usefulness from the viewpoint of reducing the processing time required when the problem is solved, for example, according to the characteristics of the DD-based simulator. Specifically, the first method 621 is effective in a case of being applied to a quantum circuit that solves a problem such as the inverse Fourier transform or the like.

Specifically, the information processing device 100 stores a second method 622 for exchanging at least the local qubit and the global qubit, so as to reduce the number of times of insertion of the SWAP gate into the quantum circuit. The second method 622 is effective, for example, in a case where it is preferable to prioritize reduction in a communication amount. Specifically, the second method 622 is effective in a case of being applied to a quantum circuit such as a random circuit.

(6-4) The information processing device 100 considers a type useful when the large-scale quantum circuit 600 is executed, among the plurality of types, and selects any one type to be applied to the large-scale quantum circuit 600.

For example, the information processing device 100 measures a processing time when the initial small-scale quantum circuit 601 that performs an operation on the plurality of second qubits in the order 611 of the first type is executed by the DD-based quantum circuit simulator. For example, the information processing device 100 generates a small-scale quantum circuit 601-A that performs an operation on the plurality of second qubits in the order 612 of the second type, based on the initial small-scale quantum circuit 601 and measures a processing time when the small-scale quantum circuit 601-A is executed by the DD-based quantum circuit simulator.

For example, the information processing device 100 generates a small-scale quantum circuit 601-B that performs an operation on the plurality of second qubits in the order 613 of the third type, based on the initial small-scale quantum circuit 601 and measures a processing time when the small-scale quantum circuit 601-B is executed by the DD-based quantum circuit simulator. The information processing device 100 selects any one type of which the measured processing time is the shortest, from among the plurality of types, as the type to be applied to the large-scale quantum circuit 600.

As a result, the information processing device 100 can appropriately select any one type to be applied to the large-scale quantum circuit 600, in consideration of whether or not each of the plurality of types is useful from the viewpoint of reducing the processing time required when the large-scale quantum circuit 600 is executed. In the example in FIG. 6, it is assumed that the information processing device 100 select the first type.

(6-5) The information processing device 100 considers a method useful when the large-scale quantum circuit 600 is executed, among the plurality of methods, and selects any one method to be applied to the large-scale quantum circuit 600.

For example, the information processing device 100 generates a small-scale quantum circuit 601-b to which the first method for performing the operation on the plurality of second qubits in the order 611 of the first type is applied, by applying the first method to the initial small-scale quantum circuit 601. For example, a case is considered where it is desired to move the qubit c to the end. In this case, in the first method, the order [a, b, c, d, e] is changed to the order [a, b, d, e, c], by inserting SWAP (3, 4) and SWAP (4, 5). SWAP (i, j) represents a SWAP gate that exchanges an i-th qubit and a j-th qubit. For example, the information processing device 100 measures a processing time when the generated small-scale quantum circuit 601-b is executed by the DD-based quantum circuit simulator.

For example, the information processing device 100 generates a small-scale quantum circuit 601-a to which the second method for performing the operation on the plurality of second qubits in the order 611 of the first type is applied, by applying the second method to the initial small-scale quantum circuit 601. For example, a case is considered where it is desired to move the qubit c to the end. In this case, in the second method, the order [a, b, c, d, e] is changed to the order [a, b, e, d, c], by inserting SWAP (3, 5). For example, the information processing device 100 measures a processing time when the generated small-scale quantum circuit 601-a is executed by the DD-based quantum circuit simulator. The information processing device 100 selects any one method of which the measured processing time is the shortest, from among the plurality of methods, as any one method to be applied to the large-scale quantum circuit 600.

As a result, the information processing device 100 can appropriately select any one method to be applied to the large-scale quantum circuit 600, in consideration of whether or not each of the plurality of methods is useful from the viewpoint of reducing the processing time required when the large-scale quantum circuit 600 is executed. In the example in FIG. 6, it is assumed that the information processing device 100 select the first method.

(6-8) The information processing device 100 acquires a result of executing the large-scale quantum circuit 600, by executing the large-scale quantum circuit 600 by the DD quantum circuit simulator, based on the selected type and the selected method.

For example, the information processing device 100 generates a large-scale quantum circuit 600-α to which the first method for performing the operation on the plurality of first qubits in the order of the selected first type is applied, by applying the selected first method to the initial large-scale quantum circuit 600. The information processing device 100 acquires a result of executing the large-scale quantum circuit 600-α as a result of executing the large-scale quantum circuit 600, by executing the generated large-scale quantum circuit 600-α by the DD quantum circuit simulator.

As a result, the information processing device 100 can execute the large-scale quantum circuit 600-α that is logically equivalent to the large-scale quantum circuit 600. Therefore, the information processing device 100 can substantially acquire a result of executing the large-scale quantum circuit 600. Substantially, the information processing device 100 can reduce the processing time required when the large-scale quantum circuit 600 is executed.

Here, in the typical method, it is considered to put a qubit, on which a rotation gate relatively often acts, on the global qubit, when the SWAP gate is inserted into the large-scale quantum circuit 600. Therefore, with the typical method, it is difficult to reduce the processing time required when the large-scale quantum circuit 600 is executed. Specifically, in the large-scale quantum circuit 600 that performs the inverse Fourier transform, there is a case where the qubit on which the rotation gate relatively often acts is put on the global qubit and the processing time required when the large-scale quantum circuit 600 is executed increases.

On the other hand, the information processing device 100 can reduce the processing time required when the large-scale quantum circuit 600 is executed. The information processing device 100 can consider usefulness of each of the plurality of methods for inserting the SWAP gate, with the small-scale quantum circuit 601 that is expected to have properties similar to those of the large-scale quantum circuit 600. Therefore, the information processing device 100 can easily reduce the processing time required when the large-scale quantum circuit 600 is executed. Furthermore, since the information processing device 100 can consider the usefulness of each of the plurality of methods for inserting the SWAP gate, with the small-scale quantum circuit 601, it is possible to suppress an increase in the processing time required for consideration.

### (Overall Processing Procedure)

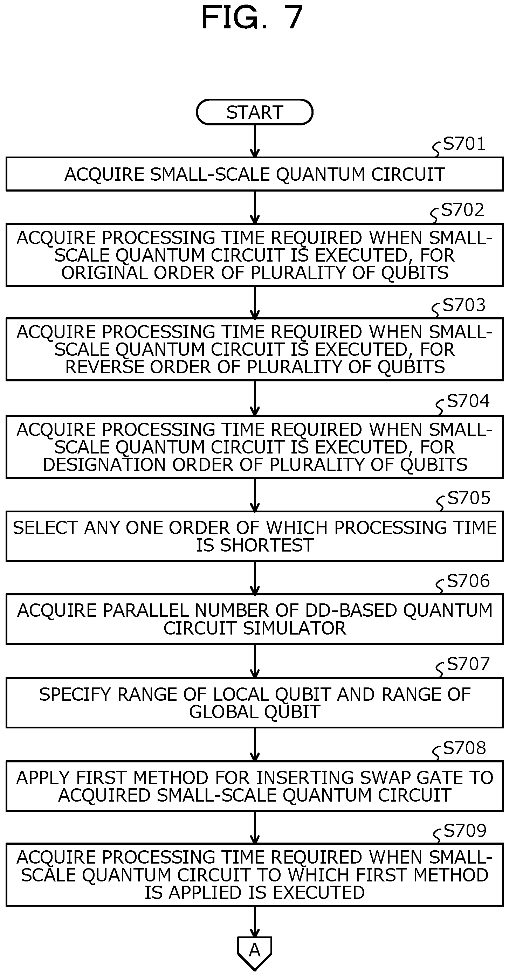

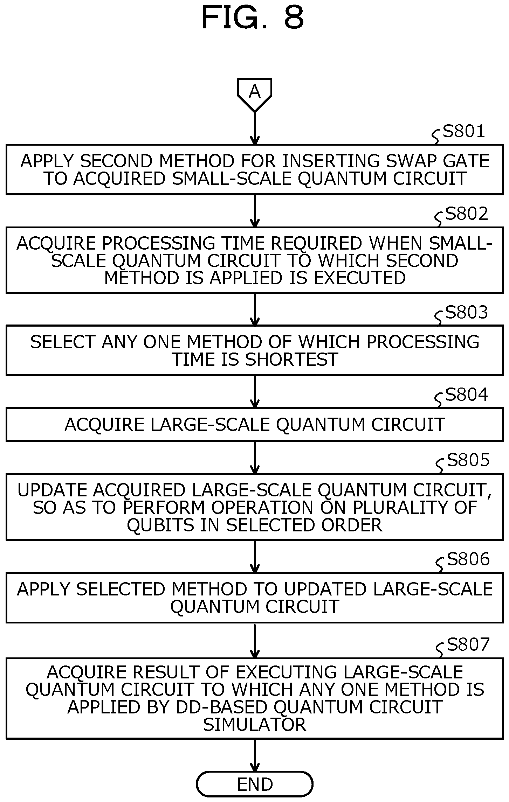

Next, an example of an overall processing procedure executed by the information processing device 100 will be described with reference to FIGs. 7 and 8. Overall processing is implemented by, for example, the CPU 301, the storage area such as the memory 302 or the recording medium 305, and the network I/F 303 illustrated in FIG. 3.

FIGs. 7 and 8 are flowcharts illustrating an example of the overall processing procedure. In FIG. 7, the information processing device 100 acquires a small-scale quantum circuit (step S701).

Next, the information processing device 100 acquires a processing time required when the small-scale quantum circuit is executed, based on a result of executing the acquired small-scale quantum circuit by the DD-based quantum circuit simulator, for an original order of the plurality of qubits (step S702).

Furthermore, the information processing device 100 acquires a processing time required when the small-scale quantum circuit is executed, based on a result of executing the acquired small-scale quantum circuit by the DD-based quantum circuit simulator, for a reverse order of the plurality of qubits (step S703).

Furthermore, the information processing device 100 acquires a processing time required when the small-scale quantum circuit is executed, based on a result of executing the acquired small-scale quantum circuit by the DD-based quantum circuit simulator, for a designation order of the plurality of qubits (step S704).

Then, the information processing device 100 selects any one order of which the acquired processing time is the shortest, from among the plurality of orders of the plurality of qubits (step S705).

Next, the information processing device 100 acquires a parallel number of the DD-based quantum circuit simulator (step S706). Then, the information processing device 100 specifies a range of the local qubit and a range of the global qubit, based on the acquired parallel number (step S707).

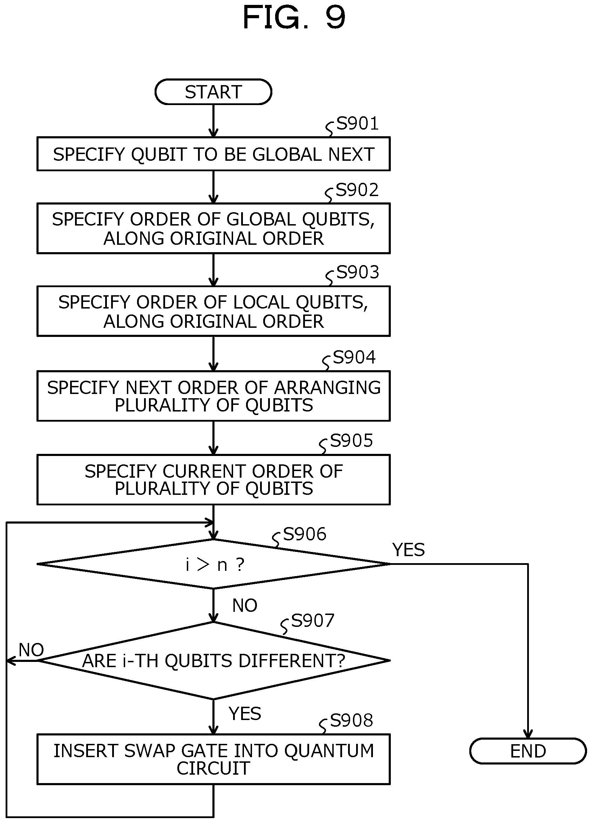

Next, the information processing device 100 applies a first method for inserting the SWAP gate to the acquired small-scale quantum circuit, by first insertion processing to be described later with reference to FIG. 9, based on the specified range (step S708). Then, the information processing device 100 acquires a processing time required when the small-scale quantum circuit to which the first method is applied is executed, based on the result of executing the small-scale quantum circuit to which the first method is applied by the DD-based quantum circuit simulator (step S709). The information processing device 100 proceeds to processing in step S801 in FIG. 8.

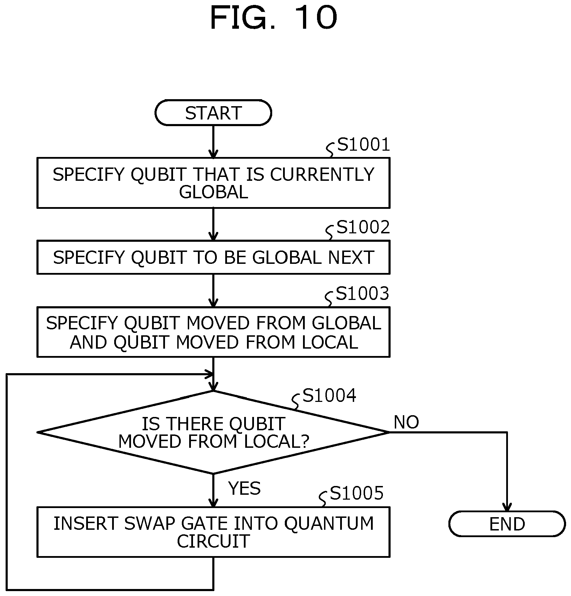

In FIG. 8, the information processing device 100 applies a second method for inserting the SWAP gate to the acquired small-scale quantum circuit, by second insertion processing to be described later with reference to FIG. 10, based on the specified range (step S801). Next, the information processing device 100 acquires a processing time required when the small-scale quantum circuit to which the second method is applied is executed, based on a result of executing the small-scale quantum circuit to which the second method is applied by the DD-based quantum circuit simulator (step S802).

Then, the information processing device 100 selects any one method of which the acquired processing time is the shortest, from among the plurality of methods for inserting the SWAP gate (step S803).

Next, the information processing device 100 acquires a large-scale quantum circuit (step S804). Then, the information processing device 100 updates the acquired large-scale quantum circuit, so as to perform an operation on the plurality of qubits in the selected order (step S805). Moreover, the information processing device 100 applies the selected method to the updated large-scale quantum circuit, based on the specified range (step S806).

Next, the information processing device 100 acquires a result of executing the large-scale quantum circuit, to which the selected method is applied, by the DD-based quantum circuit simulator (step S807). Then, the information processing device 100 ends the overall processing. As a result, the information processing device 100 can reduce the processing time required when the large-scale quantum circuit is substantially executed by the DD-based quantum circuit simulator.

### (First Insertion Processing Procedure)

Next, an example of the first insertion processing procedure executed by the information processing device 100 will be described with reference to FIG. 9. The first insertion processing is implemented by, for example, the CPU 301, the storage area such as the memory 302 or the recording medium 305, and the network I/F 303 illustrated in FIG. 3.

FIG. 9 is a flowchart illustrating an example of the first insertion processing procedure. In FIG. 9, the information processing device 100 specifies a qubit to be global next (step S901).

Next, the information processing device 100 specifies an order of the global qubits, along an original order, within a range of the global qubit, based on the specified qubit to be global next (step S902). Then, the information processing device 100 specifies an order of the local qubits, along an original order, within a range of the local qubit, based on the specified qubit to be global next (step S903).

Next, the information processing device 100 specifies a next order of arranging the plurality of qubits, based on the specified order of the global qubits and the specified order of the local qubits (step S904). Then, the information processing device 100 specifies a current order of the plurality of qubits (step S905).

Next, the information processing device 100 determines whether or not i > n (step S906). Here, in a case where i > n (step S906: Yes), the information processing device 100 ends the first insertion processing. On the other hand, in a case where i > n is not satisfied (step S906: No), the information processing device 100 proceeds to processing in step S907.

In step S907, the information processing device 100 determines whether or not an i-th qubit in the specified next order and an i-th qubit in the specified current order are different (step S907). Here, in a case where the i-th qubits are the same (step S907: No), the information processing device 100 increments i and returns to the processing in step S906. On the other hand, in a case where the i-th qubits are different (step S907: Yes), the information processing device 100 proceeds to processing in step S908.

In step S908, the information processing device 100 inserts the SWAP gate into the quantum circuit, so that the i-th qubit in the current order becomes the i-th qubit in the next order (step S908). Then, the information processing device 100 increments i and returns to the processing in step S906.

### (Second Insertion Processing Procedure)

Next, an example of the second insertion processing procedure executed by the information processing device 100 will be described with reference to FIG. 10. The second insertion processing is implemented by, for example, the CPU 301, the storage area such as the memory 302 or the recording medium 305, and the network I/F 303 illustrated in FIG. 3.

FIG. 10 is a flowchart illustrating an example of the second insertion processing procedure. In FIG. 10, the information processing device 100 specifies a qubit that is currently global (step S1001). Next, the information processing device 100 specifies a qubit to be global next (step S1002).

Then, the information processing device 100 specifies a qubit moved from global and a qubit moved from local, by comparing a currently global qubit and the qubit to be global next (step S1003).

Next, the information processing device 100 determines whether or not there is the qubit moved from local (step S1004). Here, in a case where there is no qubit moved from local (step S1004: No), the information processing device 100 ends the second insertion processing. On the other hand, in a case where there is the qubit moved from local (step S1004: Yes), the information processing device 100 proceeds to processing in step S1005.

In step S1005, the information processing device 100 inserts the SWAP gate into the quantum circuit, so as to exchange a head of the qubit moved from global and a head of the qubit moved to local (step S1005). Then, the information processing device 100 returns to the processing in step S1004.

Here, the information processing device 100 may switch some steps in each of the flowcharts in FIGs. 7 to 10 in the processing order and execute the processing. For example, steps S1001 and S1002 may be switched in the processing order. Furthermore, the information processing device 100 may omit processing of some steps in each of the flowcharts in FIGs. 7 to 10.

As described above, according to the information processing device 100, it is possible to store the plurality of methods for exchanging the local qubit and the global qubit, so as to reduce the cost required when the problem is solved. According to the information processing device 100, it is possible to store the first method for reducing the difference in the arrangement of the qubits in the quantum circuit, between before and after the insertion of the gate for exchanging the different qubits, into the quantum circuit, as one of the plurality of methods. According to the information processing device 100, it is possible to store the second method for reducing the number of times of insertion of the gate for exchanging the different qubits, into the quantum circuit that solves the problem, as one of the plurality of methods. According to the information processing device 100, it is possible to use the quantum circuit simulator that expresses the combination of the different quantum states as the decision diagram. According to the information processing device 100, it is possible to acquire the result of executing the quantum circuit, to which the method is applied, that solves the second problem smaller in scale than the first problem according to the same algorithm as the first problem, by the quantum circuit simulator, for each of the plurality of methods. According to the information processing device 100, it is possible to select any one method to be applied to the quantum circuit that solves the first problem, from among the plurality of methods, based on the acquired result of executing the quantum circuit simulator. According to the information processing device 100, it is possible to acquire the result of solving the first problem, by executing the quantum circuit to which the selected method is applied, that solves the first problem by performing the operation on the plurality of first qubits according to the algorithm, by the quantum circuit simulator. As a result, the information processing device 100 can appropriately select the method for inserting the gate for exchanging the different qubits, into the quantum circuit and reduce the processing time required when the quantum circuit that solves the first problem is executed.

According to the information processing device 100, it is possible to store the plurality of types of the orders of arranging the qubits. According to the information processing device 100, it is possible to acquire the result of executing the quantum circuit that solves the second problem by performing the operation on the plurality of second qubits in the order of the type according to the algorithm, by the quantum circuit simulator, for each of the plurality of types. According to the information processing device 100, it is possible to select any one type to be applied to the quantum circuit that solves the first problem, from among the plurality of types, based on the acquired result of the execution by the quantum circuit simulator. According to the information processing device 100, it is possible to acquire the result of executing the quantum circuit, to which the method is applied, that solves the second problem by performing the operation on the plurality of second qubits in the order of the selected type, by the quantum circuit simulator, for each method. According to the information processing device 100, it is possible to generate the quantum circuit, to which the selected method is applied, that solves the first problem by performing the operation on the plurality of first qubits in the order of the selected type. According to the information processing device 100, it is possible to acquire the result of solving the first problem, by executing the generated quantum circuit by the quantum circuit simulator. As a result, the information processing device 100 can appropriately select the type of the order of arranging the qubits and reduce the processing time required when the quantum circuit that solves the first problem is executed.

According to the information processing device 100, it is possible to store the plurality of types including at least the first type and the second type, among the first type of arranging the qubits in the original order, the second type of arranging the qubits in the reverse order of the original order, and the third type of arranging the qubits in the order in which the designation is received. As a result, the information processing device 100 can consider various types of orders of arranging the qubits and reduce the processing time required when the quantum circuit that solves the first problem is executed.

According to the information processing device 100, it is possible to use the quantum circuit simulator that is implemented by the parallel processing of the plurality of arithmetic devices 201 communicably coupled. As a result, the information processing device 100 can appropriately reduce the processing time required when the quantum circuit that solves the first problem is executed, for a situation where the interprocess communication may occur.

Note that the information processing method described in the present embodiment can be implemented by executing a program prepared in advance in a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magnetooptical disc (MO), a digital versatile disc (DVD), or the like. In addition, the information processing program described in the present embodiment may be distributed via a network such as the Internet.

## Claims

1. An information processing program comprising instructions which, when executed by a computer, cause the computer to execute processing comprising:
acquiring, for each method of a plurality of methods, a result of executing on a quantum circuit simulator a second quantum circuit obtained by applying the each method to a first quantum circuit, the first quantum circuit being a quantum circuit that solves a second problem smaller in scale than a first problem of an original quantum circuit according to an algorithm same as the first problem, each of the plurality of methods being a method for exchanging a local qubit and a global qubit, so as to reduce cost required when a problem is solved, by inserting a gate that exchanges different qubits, into a quantum circuit that solves the problem, the quantum circuit simulator expressing a combination of different quantum states as a decision diagram;
selecting, based on the acquired result of executing on the quantum circuit simulator the second quantum circuit obtained by each of the plurality of methods, any one method from among the plurality of methods; and
acquiring a result of solving the first problem by executing on the quantum circuit simulator a third quantum circuit obtained by applying the selected method to the original quantum circuit, the third quantum circuit being a quantum circuit that solves the first problem by performing an operation on a plurality of first qubits according to the algorithm, wherein
the plurality of methods includes: a first method of exchanging a local qubit and a global qubit, so as to reduce a difference in arrangement of qubits in a quantum circuit, between before and after the insertion of the gate into the quantum circuit; and a second method of exchanging a local qubit and a global qubit, so as to reduce the number of times of the insertion of the gate into the quantum circuit.

2. The information processing program according to claim 1, the processing further comprising:
acquiring, for each of a plurality of types of orders of arranging qubits, a result of executing on the quantum circuit simulator the second quantum circuit by performing an operation on a plurality of second qubits in an order of the type according to the algorithm; and
selecting any one of the plurality of types to be applied to the first quantum circuit, from among the plurality of types, based on the result of executing on the quantum circuit simulator the second quantum circuit that solves the second problem by performing the operation on the plurality of second qubits in an order of each type, wherein
the acquiring of the result of executing the second quantum circuit includes acquiring, for each method of the plurality of methods, a result of executing on the quantum circuit simulator the second quantum circuit obtained by applying the each method to the first quantum circuit, the second quantum circuit being a quantum circuit that solves the second problem by performing the operation on the plurality of second qubits in the order of the selected type, and
the acquiring of the result of solving the first problem includes acquiring the result of solving the first problem by executing on the quantum circuit simulator the third quantum circuit that solves the first problem by performing the operation on the plurality of first qubits in the order of the selected type.

3. The information processing program according to claim 1 or 2, wherein the quantum circuit simulator is implemented by parallel processing of a plurality of arithmetic devices that is communicably coupled.

4. An information processing method implemented by a computer, the information processing method comprising:
acquiring, for each method of a plurality of methods, a result of executing on a quantum circuit simulator a second quantum circuit obtained by applying the each method to a first quantum circuit, the first quantum circuit being a quantum circuit that solves a second problem smaller in scale than a first problem of an original quantum circuit according to an algorithm same as the first problem, each of the plurality of methods being a method for exchanging a local qubit and a global qubit, so as to reduce cost required when a problem is solved, by inserting a gate that exchanges different qubits, into a quantum circuit that solves the problem, the quantum circuit simulator expressing a combination of different quantum states as a decision diagram;
selecting, based on the acquired result of executing on the quantum circuit simulator the second quantum circuit obtained by each of the plurality of methods, any one method from among the plurality of methods; and
acquiring a result of solving the first problem by executing on the quantum circuit simulator a third quantum circuit obtained by applying the selected method to the original quantum circuit, the third quantum circuit being a quantum circuit that solves the first problem by performing an operation on a plurality of first qubits according to the algorithm, wherein
the plurality of methods includes: a first method of exchanging a local qubit and a global qubit, so as to reduce a difference in arrangement of qubits in a quantum circuit, between before and after the insertion of the gate into the quantum circuit; and a second method of exchanging a local qubit and a global qubit, so as to reduce the number of times of the insertion of the gate into the quantum circuit.

5. An information processing apparatus comprising a control unit configured to perform processing comprising:
acquiring, for each method of a plurality of methods, a result of executing on a quantum circuit simulator a second quantum circuit obtained by applying the each method to a first quantum circuit, the first quantum circuit being a quantum circuit that solves a second problem smaller in scale than a first problem of an original quantum circuit according to an algorithm same as the first problem, each of the plurality of methods being a method for exchanging a local qubit and a global qubit, so as to reduce cost required when a problem is solved, by inserting a gate that exchanges different qubits, into a quantum circuit that solves the problem, the quantum circuit simulator expressing a combination of different quantum states as a decision diagram;
selecting, based on the acquired result of executing on the quantum circuit simulator the second quantum circuit obtained by each of the plurality of methods, any one method from among the plurality of methods; and
acquiring a result of solving the first problem by executing on the quantum circuit simulator a third quantum circuit obtained by applying the selected method to the original quantum circuit, the third quantum circuit being a quantum circuit that solves the first problem by performing an operation on a plurality of first qubits according to the algorithm, wherein
the plurality of methods includes: a first method of exchanging a local qubit and a global qubit, so as to reduce a difference in arrangement of qubits in a quantum circuit, between before and after the insertion of the gate into the quantum circuit; and a second method of exchanging a local qubit and a global qubit, so as to reduce the number of times of the insertion of the gate into the quantum circuit.
